**Europäisches Patentamt**

**European Patent Office**

**Office européen des brevets**

(19)

(11) Veröffentlichungsnummer : **0 399 203 B1**

(12)

# EUROPÄISCHE PATENTSCHRIFT

(45) Veröffentlichungstag der Patentschrift :
**08.07.92 Patentblatt 92/28**

(51) Int. Cl.$^5$ : **B01J 35/04,** B01J 37/02,
// B01D53/36

(21) Anmeldenummer : **90107181.1**

(22) Anmeldetag : **14.04.90**

(54) **Monolith-bzw. wabenförmiger Katalysator.**

(30) Priorität : **20.04.89 DE 3912915**

(43) Veröffentlichungstag der Anmeldung :
**28.11.90 Patentblatt 90/48**

(45) Bekanntmachung des Hinweises auf die
Patenterteilung :
**08.07.92 Patentblatt 92/28**

(84) Benannte Vertragsstaaten :
**DE ES FR GB IT SE**

(56) Entgegenhaltungen :
**US-A- 3 901 821
US-A- 3 908 047
US-A- 4 340 505
PATENT ABSTRACTS OF JAPAN, 21. Juni
1986, Seite 44 C 355;
PATENT ABSTRACTS OF JAPAN, 1986;**

(73) Patentinhaber : **Degussa Aktiengesellschaft
Weissfrauenstrasse 9
W-6000 Frankfurt am Main 1 (DE)**

(72) Erfinder : **Engler, Bernd, Dr.
Treuener Strasse 2
W-6450 Hanau 9 (DE)**
Erfinder : **Koberstein, Edgar, Dr.
Wolfskernstrasse 8
W-8755 Alzenau (DE)**
Erfinder : **Lox, Egbert, Dr.
Grünaustrasse 9
W-6450 Hanau 9 (DE)**
Erfinder : **Völker, Herbert
Johanniterstrasse 11
W-6721 Zeiskam (DE)**

EP 0 399 203 B1

**Beschreibung**

Die Erfindung bezieht sich auf einen Monolith- bzw. wabenförmigen Katalysator, insbesondere zur Reinigung der Abgase von Brennkraftmaschinen, aus einem mit parallelen Strömungskanälen durchzogenen inerten keramischen oder metallischen Träger, einer darauf angeordneten Schicht aus katalyseförderndem Metalloxid und einer von dem Metalloxid getragenen katalytisch aktiven Komponente. Der Katalysator weist verbessertes Anspringverhalten auf.

Eine wichtige Eigenschaft von Katalysatoren des Monolith- oder Wabentyps ist die Geschwindigkeit, mit der der Katalysator bei Beaufschlagung mit einem heißen, zu behandelnden Gas die Betriebstemperatur erlangt. Die Anwendung solcher Katalysatoren als Chemiekatalysatoren oder Abgasreinigungskatalysatoren, z. B. für industrielle Abgase oder Motorabgase läßt sich wesentlich durch die Verbesserung dieser Eigenschaft vereinfachen.

Dies wurde bislang durch eine mehr oder weniger kostspielige Erhöhung der Menge an katalytisch aktivem Material oder durch Wärmedämmungsmaßnahmen an der Katalysatoreinheit zu erreichen versucht.

Die Erfindung eröffnet einen neuen Weg zur Lösung des Problems.

Gegenstand der Erfindung ist ein Monolith- bzw. wabenförmiger Katalysator, insbesondere zur Reinigung der Abgase von Brennkraftmaschinen, aus einem mit parallelen Strömungskanälen durchzogenen inerten keramischen oder metallischen Träger, einer darauf angeordneten Schicht aus katalyseförderndem Metalloxid und einer von dem Metalloxid getragenen katalytisch aktiven Komponente, welcher dadurch gekennzeichnet ist, daß die Konzentration des katalysefördernden Metalloxids von der Peripherie zur Mittelachse des Trägers ansteigt.

Durch die erfindungsgemäße Konzentrationsverteilung der meist nach dem Suspensionsbeschichtungsverfahren aufgebrachten katalysefördernden Metalloxidschicht, z. B. aus $\gamma$-$Al_2O_3$, $CeO_2$, $TiO_2$, $SiO_2$ und dergl. wird vor allem ein Ausgleich des naturgegebenen Geschwindigkeitsprofils bei Durchströmung von Monolithen oder Waben, ja sogar leeren Rohren durch Gase, welches um die Mittelachse stärker als an den Randzonen ausgeprägt ist, erreicht. Die Folge ist eine gleichmäßigere Verteilung der Gasströmung in der Katalysatoreinheit und dadurch eine ausgeglichenere Wärmeentwicklung beim Einsetzen und Ablaufen exothermer Reaktionen.

Die erfindungsgemäße Verteilung des als Trägermaterial für die katalytisch aktive Komponente dienenden Metalloxids kann nach einer sehr wirksamen Ausführungsform der Erfindung noch weiter gesteigert werden, indem zusätzlich vorgesehen wird, daß die Konzentration der katalytisch aktiven Komponente von der Mittelachse zur Peripherie des Trägers ansteigt.

Im allgemeinen wirkt eine von der Mittelachse zur Peripherie ansteigende Edelmetall-Konzentration einer Minderung der Konversion in den außenliegenden Monolith- bzw. Wabenbezirken infolge Fahrtwind-bedingter Abkühlung des Schadstoffkonverters, indem sich der Monolith bzw. die Wabe befindet, entgegen.

Das auf Metalloxidbeschichtung und gegebenenfalls Beladung mit katalytisch aktiver Komponente erfindungsgemäß anzuwendende Konzentrationsprofil, das stufenweise oder kontinuierlich ausgebildet werden soll, läßt sich z. B. stufenweise einstellen, indem eine Stirnfläche während der in mehreren Stufen erfolgenden Beschichtung bzw. Beladung durch eine das Zentrum oder den Randbereich abdeckende Maske, z. B. in Form einer Scheibe bzw. eines Ringes, von dem jeweiligen Auftrag freigehalten und die freibleibende Fläche entsprechend der gewünschten Konzentration ein- oder mehrmals mit der aufzutragenden Substanz beladen wird.

Eine kontinuierliche Beladung mit Oxidbeschichtung kann durch eine nach Art eines Fotozentralverschlusses stufenlos öffnende oder schließende Lamellenanordnung erreicht werden, wobei diese entsprechend der für eine gewünschte örtliche Beladung erforderlichen Verweilzeit mit variierbarer Geschwindigkeit geöffnet oder geschlossen wird.

Eine kontinuierliche Beladung mit der katalytisch aktiven Komponente kann aber auch erreicht werden, indem eine auf einer Spiralbahn um die Mittelachse des Monolithen bzw. der Wabe rotierende Beaufschlagungsdüse, die gleichzeitig mehrere Kanäle bestreichen kann, mit der eine gewünschte örtliche Beladung erforderlichen Bewegungsgeschwindigkeit betätigt wird.

Die Zufuhrleitung bzw. die Zufuhrdüse kann auch als Drehschieber in Form einer über einer Stirnfläche des Monolithen bzw. der Wabe rotierenden Schlitzplatte mit kontinuierlich längenveränderbarem Schlitz ausgebildet sein.

In Verbindung mit der Anwendung der genannten Masken kann auch über die Strömungsgeschwindigkeit einer Beladungsflüssigkeit die örtliche Konzentration der Beladung beeinflußt werden, wobei letztere im allgemeinen bei Erhöhung des Durchsatzes durch die Kanäle des Monolithen bzw. der Wabe ansteigt.

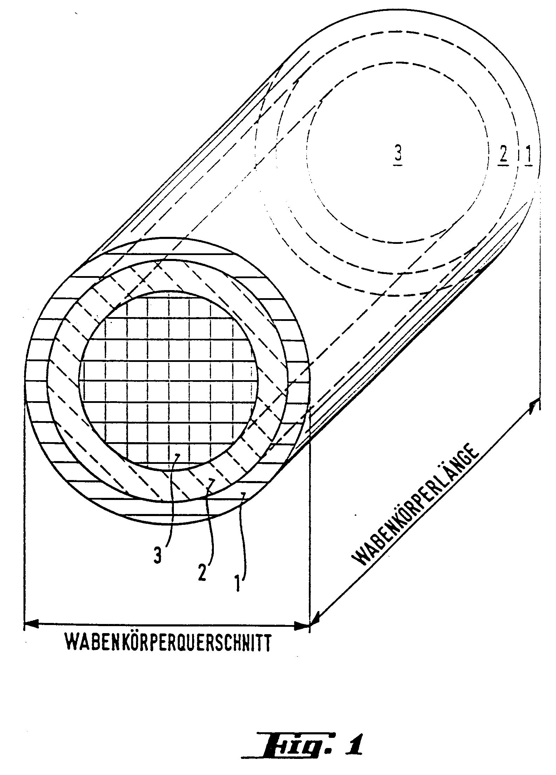

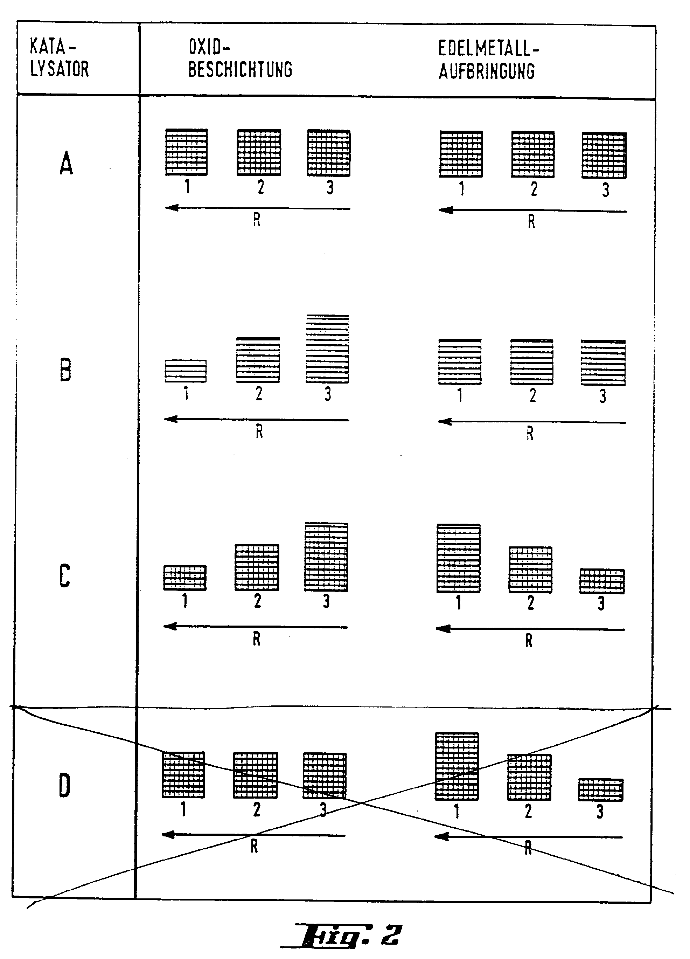

Die Erfindung wird im folgenden anhand von Ausführungsbeispielen in Verbindung mit einer einfachen Versuchsanordnung und einer schematischen Zeichnung mit Figur 1 und Figur 2 näher erläutert.

EP 0 399 203 B1

Beispiel 1

Es wurden drei Auto-Abgas-Katalysatoren (bezeichnet als Katalysator A, B, und C) mit einem Wabenkörper aus Cordierit mit 62 Zellen/cm$^2$ (400 Zellen/inch$^2$), Durchmesser 118 mm (4.66 inch), Länge 152,4 mm (6 inch), Wandstärke 0,1524 mm (6 mil), hergestellt.

Die Herstellung der Katalysatoren erfolgte in vier Schritten:

Der erste Schritt, die Herstellung einer katalyseförderndes mit Promotoren dotiertes Metalloxid enthaltenden Beschichtungssuspension, war identisch für alle drei Katalysatoren und umfaßte die Dispergierung von hochreinem Gamma-Aluminiumoxidpulver mit einer spezifischen Oberfläche von 180 m$^2$/g in Wasser.

Zu dieser Aluminiumoxiddispersion wurden nacheinander unter kräftigem Rühren Cercarbonat und Zirkoncarbonat zugegeben, so daß für 100 Gewichtsteile $Al_2O_3$, 60 Gewichtsteile $CeO_2$ und 3 Gewichtsteile $ZrO_2$ vorlagen.

Der zweite Schritt, die Belegung des Wabenkörpers mit der bereiteten Dispersion, erfolgte bei Katalysator A, dem Vergleichskatalysator, durch langsames Eintauchen des Wabenkörpers in die Dispersion, langsames Herausziehen, Freiblasen der Wabenkörper-Kanäle mittels Luft und anschließendes 10minütiges Trockenblasen des so belegten Wabenkörpers mit Luft bei einer Temperatur von 120° C.

Dieser Vorgang wurde 3 x wiederholt. Anschließend wurde der mit der dotierten $Al_2O_3$-Schicht belegte trockene Wabenkörper während 2 Stunden bei 600° C mit Luft durchströmt, um das Cer- und Zirkoncarbonat in die entsprechenden Oxide umzusetzen. Der so belegte Wabenkörper enthielt 120 Gramm Beschichtung pro Liter Wabenkörper-Volumen.

Für die Katalysatoren B und C erfolgte die Beschichtung der Wabenkörper in drei Tauchgängen.

Nach dem ersten Tauchgang mit anschließendem Freiblasen der Wabenkörperkanäle mit Luft und Trocknung während 10 Minuten an Luft bei 120° C wurden auf beiden Stirnflächen der Wabenkörper drei konzentrische Zonen mit gleicher Oberfläche markiert, wie auf Abbildung 1 dargestellt.

Vor dem zweiten Tauchgang wurde Zone 1 auf beiden Stirnflächen mit Klebeband abgeklebt. Nach dem zweiten Tauchgang mit anschließendem Freiblasen der Kanäle mit Luft und Trocknung während 10 Minuten an Luft bei 120°C wurde jetzt auch Zone 2 auf beiden Stirnseiten mit Klebeband abgeklebt. Dann erfolgte der dritte Tauchgang mit Freiblasen der Kanäle und Trocknung an Luft.

Anschließend wurde das Klebeband entfernt und der Wabenkörper für 2 Stunden mit Luft bei 600° C durchströmt, um die Cer- und Zirkoncarbonate in die entsprechenden Oxide umzuwandeln. Der so belegte Wabenkörper enthielt in Zone 1 60 Gramm Beschichtung pro Liter Wabenkörper-Volumen, in Zone 2 100 und in Zone 3 200 Gramm.

Insgesamt enthielt der Wabenkörper 120 Gramm Oxidbeschichtung pro Liter Wabenkörper-Volumen gemäß der Bezeichnung

$$\frac{60 \text{ (g/l) x } V_1 (1) + 100 \text{ (g/l) x } V_2 (1) + 200 \text{ (g/l) x } V_3 (1)}{V_1 (1) + V_2 (1) + V_3 (1)} = 120 \text{ g/l}$$

wobei $V_1 = V_2 = V_3$ ist und jeweils ein Drittel des Wabenkörpervolumens ausmacht.

Durch diese Herstellungsprozedur ist im Vergleich zum Vergleichskatalysator A mehr Oxidbeschichtung in der Mitte der Wabenkörper (Zone 3) und weniger Washcoat am äußeren Rand der Wabenkörper (Zone 1) vorhanden.

Dadurch sind die durchströmten Flächen im Vergleich zum Vergleichskatalysator A in der Mitte der Wabenkörper (Zone 3) kleiner und am Rand (Zone 1) größer, was im Endeffekt eine homogenere Strömungsverteilung der Abgase in den Katalysatoren B, und C bewirkt.

Der dritte Schritt, gerichtet auf die Herstellung eines Autoabgaskatalysators, betraf die Aufbringung des Edelmetalls.

Für die drei Katalysatoren A, B und C wurde hierzu eine wäßrige Lösung von $H_2PtCl_6$ und $RhCl_3$ verwendet. Die gesamte Menge Edelmetall auf den drei Katalysatoren entspricht 0.714 Gramm pro Liter Katalysatorvolumen im Gewichtsmengenverhältnis Pt : Rh = 5 : 1.

Für Katalysator A, den Vergleichskatalysator, erfolgte die Edelmetallaufbringung durch einmaliges Eintauchen des mit der Oxidbeschichtung belegten Wabenkörpers in wäßrige Edelmetall-Lösung, anschließendes 4stündiges Trocknen an Luft bei 250° C und 2stündiges Kalzinieren bei 600° C in Luft. Katalysator A enthielt die Edelmetalle sowohl über dem Wabenkörper querschnitt als auch über die Wabenkörperlänge homogen verteilt. Katalysator B enthielt die Edelmetalle über dem Wabenkörperquerschnitt homogen verteilt. Dies wurde erreicht durch Aufbringen der gesamten Katalysator A entsprechenden Edelmetallmenge in drei Schritten, und zwar so, daß jede Zone nur einmal mit Edelmetall in Kontakt kommt.

Im ersten Schritt wurden deshalb Zone 2 und 3 auf beiden Stirnseiten abgeklebt; der so abgeklebte Monolith wurde in eine Lösung getaucht, die ein Drittel der erwünschten Edelmetallmenge enthielt.

Beim zweiten Schritt wurden Zone 1 und 3 auf beiden Stirnseiten abgeklebt; der derart abgeklebte Monolith wurde wieder in eine Lösung getaucht, die das zweite Drittel der erwünschten Edelmetallmenge enthielt.

Im dritten Schritt wurden dann die Zonen 1 und 2 auf beiden Stirnseiten abgeklebt; der so abgeklebte Monolith wurde in eine Lösung getaucht, die das letzte Drittel der erwünschten Edelmetallmenge enthielt.

Nach den Tauchgängen erfolgte eine 4stündige Trocknung an Luft bei 250° C und eine anschließende 2stündige Kalzinierung in Luft bei 600° C.

Katalysator C enthielt das Edelmetall über dem Wabenkörperquerschnitt inhomogen verteilt, so daß an dessen Rand (Zone 1) mehr Edelmetall vorlag als in dessen Mitte (Zone 3). Um dies zu erreichen, wurde die Edelmetallimprägnierung in drei Schritten durchgeführt.

Im ersten Tauchschritt wurde der Wabenkörper ohne weitere Maßnahmen in die wäßrige Lösung der Edelmetallsalze getaucht. Vor dem zweiten Schritt wurde Zone 3 auf beiden Stirnflächen des Wabenkörpers abgeklebt, und vor dem dritten Tauchschritt wurden sowohl Zone 2 als auch Zone 3 auf beiden Stirnflächen des Wabenkörpers abgeklebt.

Nach diesen drei Tauchschritten erfolgte eine 4stündige Trocknung an Luft bei 250° C und anschließend eine 2stündige Kalzinierung in Luft bei 600° C.

Katalysator C enthielt in Zone 1, d.h. am Rand des Wabenkörperquerschnitts, 0.832 Gramm Edelmetall pro Liter Katalysatorvolumen, in Zone 2 waren 0.620 Gramm vorhanden und in Zone 3, d. h. in der Mitte des Wabenkörperquerschnitts, 0.436 Gramm, jeweils im Gewichtsverhältnis Pt : Rh = 5 : 1.

Die drei Katalysatoren A, B und C wurden im letzten Schritt der Herstellung während 8 Stunden bei 550° C im Wasserstoffstrom reduziert.

Die Verteilung von Washcoat- und Edelmetallmenge über dem Wabenkörperquerschnitt ist in Abbildung 2 für die drei Katalysatoren A, B und C dargestellt (R = Abstand zwischen Mittelachse und Peripherie (Pfeilspitze), 1, 2 und 3 bedeuten die Zonen).

Beispiel 2

Die drei Katalysatoren A, B und C von Beispiel 1 wurden an einem Motorprüfstand, sowohl frisch als auch nach einer 20stündigen Motoralterung, geprüft, wobei die Temperatur der Abgase bei der Alterung am Eintritt des Katalysators 1000° C erreichte.

Für die Überprüfung der Katalysatorleistung und für die Motoralterung wurde ein 1.8 l-Ottomotor verwendet. Alle Tests wurden mit bleifreiem Superbenzin gefahren.

Die Überprüfung der Katalysatorleistung erfolgte anhand von zwei Tests.

Im ersten Test wurde das Anspringverhalten des Katalysators überprüft, d. h. es wurde die Temperatur bestimmt, bei der 50 % der Kohlenwasserstoffe, des Kohlenmonoxids und der Stickoxide umgewandelt werden. Dies erfolgte bei Lambda = 1.02 für Kohlenmonoxid und Kohlenwasserstoffe und bei Lambda = 0.9840 für die Stickoxide. Die Raumgeschwindigkeit bei diesem Test betrug 60.000 Normliter Abgas pro Liter Katalysatorvolumen und Stunde.

Im zweiten Test wurde die Konvertierung von Kohlenmonoxid, Kohlenwasserstoffen und Stickoxiden in Abhängigkeit vom Lambda-Wert bei 400° C Abgastemperatur vor Katalysator und 60.000 Normliter Abgas pro Liter Katalysatorvolumen und Stunde Raumgeschwindigkeit bestimmt.

Das Anspringverhalten der frischen Katalysatoren A, B und C ist in Tabelle 1 dargestellt.

Aus den Ergebnissen folgt, daß die Anspringtemperatur für Kohlenmonoxid- und Kohlenwasserstoffkonversion durch gezielte.Verteilung der Menge an Oxidbeschichtung über dem Wabenkörperquerschnitt um ca. 10° C gesenkt werden kann.

Das Anspringverhalten der motorgealterten Katalysatoren A, B und C ist in Tabelle 2 dargestellt.

Aus diesen Ergebnissen ist noch deutlicher zu sehen, daß durch eine gezielte Positionierung der Oxidbeschichtung und der Edelmetalle über den Querschnitt der Wabenkörper die Anspringtemperatur für Kohlenmonoxid und Kohlenwasserstoffe um ca. 15° C und für die Stickoxide um ca. 40 bis 50° C gesenkt werden kann.

Weiter zeigen die Ergebnisse, daß derjenige Katalysator am besten abschneidet, der am äußeren Rand des Wabenkörperquerschnitts mehr Edelmetall und weniger Oxidbeschichtung und in der Mitte mehr Oxidbeschichtung und weniger Edelmetall hat.

TABELLE 1: Temperatur für 50 % Konvertierung
(frische Katalysatoren)

| Katalysator | Lambda = 1.02 | | Lambda = 0.984 |
|---|---|---|---|
| | $CO_{50\%}$ ($^{0}$ C) | $HC_{50\%}$ ($^{0}$ C) | $NO_x\ 50\%$ ($^{0}$ C) |
| A (Vergleich) | 312 | 313 | 328 |
| B | 295 | 296 | 310 |
| C | 299 | 301 | 328 |

TABELLE 2: Temperatur für 50 % Konvertierung
(gealterte Katalysatoren)

| Katalysator | Lambda = 1.02 | | Lambda = 0.984 |
|---|---|---|---|
| | $CO_{50\%}$ ($^{0}$ C) | $HC_{50\%}$ ($^{0}$ C) | $NO_x\ 50\%$ ($^{0}$ C) |
| A | 336 | 340 | 388 |
| B | 330 | 333 | 345 |
| C | 320 | 327 | 334 |

## Patentansprüche

1. Monolith- bzw. wabenförmiger Katalysator, insbesondere zur Reinigung der Abgase von Brennkraftmaschinen, aus einem mit parallelen Strömungskanälen durchzogenen inerten keramischen oder metallischen Träger, einer darauf angeordneten Schicht aus katalyseförderndem Metalloxid und einer von dem Metalloxid getragenen katalytisch aktiven Komponente,
**dadurch gekennzeichnet,**
daß die Konzentration des katalysefördernden Metalloxids von der Peripherie zur Mittelachse des Trägers an-

5

steigt.

2. Katalysator nach Anspruch 1,

**dadurch gekennzeichnet,**

daß die Konzentration der katalytisch aktiven Komponente von der Mittelachse zur Peripherie des Trägers ansteigt.

## Claims

1. A monolithic or honeycomb catalyst, more particularly for purifying the exhaust gases from internal combustion engines, comprising an inert ceramic or metal carrier formed with parallel flow channels, a layer of catalysis-promoting metal oxide disposed thereon and a catalytically active component carried by the metal oxide,

**characterised in that**

the concentration of the catalysis-promoting metal oxide increases from the periphery to the central axis of the carrier.

2. A catalyst according to claim 1,

**characterised in that**

the concentration of the catalytically active component increases from the central axis to the periphery of the carrier.

## Revendications

1. Catalyseur sous forme monolithique ou en nid d'abeilles, en particulier pour la purification des gaz de combustion des moteurs à combustion interne, formé d'un support céramique ou métallique, inerte, parcouru par des canaux d'écoulement parallèles, d'une couche disposée par-dessus à base d'oxyde métallique favorisant la catalyse et d'un composant actif catalytique, porté par l'oxyde métallique,

**caractérisé en ce que**

la concentration de l'oxyde métallique favorisant la catalyse augmente de la périphérie vers à l'axe médian du support.

2. Catalyseur selon la revendication 1,

**caractérisé en ce que**

la concentration du composant actif catalytique augmente de l'axe médian par rapport à la périphérie du support.

_Fig. 1_

Fig. 2